# EUROPEAN PATENT APPLICATION

(11) **EP 4 726 442 A1**
(43) Date of publication of application: **15.04.2026**
(21) Application number: 25205950.6
(22) Date of filing: 01.10.2025
(51) Int. Cl.: G02B 5/12, G02B 30/56

(54) **DISPLAY APPARATUS**

(30) Priority: 09.10.2024 JP 2024177176
(71) Applicant: Alps Alpine Co., Ltd., Ota-ku, Tokyo 145-8501 (JP)
(72) Inventor: Yuza, Shingo, Iwaki-city Fukushima (JP); Ashimine, Katsunari, Iwaki-city Fukushima (JP)
(74) Representative: Schmitt-Nilson Schraud Waibel Wohlfrom Patentanwälte Partnerschaft mbB

(57) **Abstract**

A display apparatus is configured to display an aerial image by using retroreflection. The display apparatus includes a light source; a beam splitter configured to reflect light output from the light source; and a plurality of retroreflective materials configured to reflect light from the beam splitter in a same direction as incident light. The plurality of retroreflective materials include at least three retroreflective materials that are arranged in a range where the aerial image can be observed, and the plurality of retroreflective materials are in a positional relationship such that at least one side of each of the retroreflective materials is overlapping with a side of an adjacent retroreflective material.

## Description

The present invention relates to a display apparatus for displaying an aerial image by retroreflection, and more particularly, to an effective arrangement of a retroreflective material.

Aerial imaging by retro-reflection (AIRR) is known. For example, in the aerial imaging apparatus of Patent Document 1, a decorative sheet is arranged between an imaging element and an imaging position P such that the imaging element cannot be observed from the outside.

### RELATED-ART DOCUMENTS

### PATENT DOCUMENTS

Patent Document 1: JP 2020-76811A.

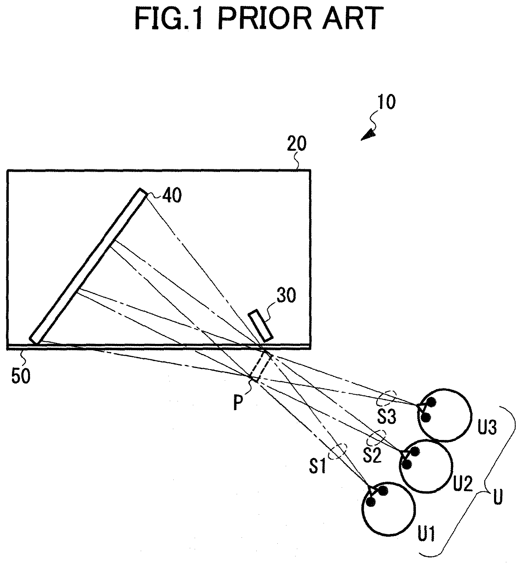

FIG. 1 is a top view schematically illustrating the internal configuration of a conventional AIRR type display apparatus. A display apparatus 10 includes a rectangular casing 20, a light source 30 and a retroreflective material 40 are arranged in the casing 20, and a beam splitter (or half mirror) 50 is attached to the surface of the casing 20. An original image of an aerial image P output from the light source 30 is reflected by the beam splitter 50, the reflected light is retroreflected by the retroreflective material 40, and the retroreflected light is transmitted through the beam splitter 50 to form the aerial image P.

The aerial image P is formed at a position symmetrical to the light source 30 with respect to the surface of the beam splitter 50. The range in which the observer U can observe the aerial image P is limited to the range in which the retroreflective material 40 can be observed from the viewpoint of the observer U via the beam splitter 50. In the example illustrated in the figure, the observer U1 can observe the aerial image P within the range of a viewing angle S1, the observer U2 can observe the aerial image P within the range of a viewing angle S2, and the observer U3 can observe the aerial image P within the range of a viewing angle S3. Further, the aerial image P cannot be observed at a position outside the observer U1 or at a position outside the observer U3, because the retroreflective material 40 cannot be observed.

In such a conventional display apparatus 10, because the retroreflective surface of the retroreflective material 40 is planar, there is a problem that the luminance and image quality of the aerial image P are significantly decreased depending on the angle at which the observer U observes the aerial image P. One of the causes is that the retroreflective (returning the incident light at the same angle) light from the retroreflective material 40 is decreased depending on the angle at which the aerial image P is observed. In a state in which the luminance and image quality are the best, the angle of the retroreflective material 40 at the point of sight of the observer U is perpendicular with respect to the line of sight, but if the retroreflective material 40 is planar, the angle between the line of sight and the retroreflective material is not necessarily perpendicular.

An object of the present invention is to provide a display apparatus capable of reducing or preventing a degrading of luminance and image quality of an aerial image depending on the viewing angle of an observer.

The present disclosure relates to a display apparatus according to the appended claims. Embodiments are disclosed in the dependent claims. According to an embodiment, a display apparatus configured to display an aerial image by using retroreflection, includes a light source; a beam splitter configured to reflect light output from the light source; and a plurality of retroreflective materials configured to reflect light from the beam splitter in a same direction as incident light, wherein the plurality of retroreflective materials include at least three retroreflective materials that are arranged in a range where the aerial image can be observed, and the plurality of retroreflective materials are in a positional relationship such that at least one side of each of the retroreflective materials is overlapping with a side of an adjacent retroreflective material.

Other objects and further features of the present invention will be apparent from the following detailed description when read in conjunction with the accompanying drawings, in which:
FIG. 1 is a top view illustrating a schematic configuration of a conventional display apparatus of the AIRR system;
FIG. 2A is a top view illustrating a schematic configuration of a display apparatus according to a first embodiment of the present invention, and FIG. 2B is a view illustrating a preferred arrangement of a plurality of retroreflective materials;
FIG. 3A is an example of an aerial image when a side (edge) of a retroreflective material is exposed, and FIG. 3B is an example of an aerial image when a side (edge) of a retroreflective material according to an embodiment is covered by an adjacent retroreflective material;
FIG. 4A is a front view of a retroreflective material, FIG. 4B is a side view of a retroreflective material, and FIG. 4C is a perspective view illustrating a retroreflective surface of a pseudo three-dimensional curved surface composed of a plurality of retroreflective materials;
FIGS. 5A to 5C illustrate a configuration of a base for supporting the retroreflective materials according to the embodiment, FIG. 5A is a top view of the base, FIG. 5B is a front view thereof, and FIG. 5C is a side view thereof;
FIGS. 6A and 6B are diagrams illustrating another arrangement of the retroreflective material according to an embodiment; and
FIG. 7 is a top view illustrating a schematic configuration of a display apparatus according to a second embodiment of the present invention.

According to an embodiment of the present invention, because at least three retroreflective materials are arranged in a range in which the aerial image can be observed, decrease in the retroreflective light from the retroreflective material depending on the viewing angle of an observer is mitigated, and thus decrease of the luminance and image quality of the aerial image can be prevented.

Next, embodiments of the present invention will be described. In an embodiment of the present invention, a display apparatus disassembles the retroreflective materials in the same plane into small parts (e.g., strips) and arranges the retroreflective materials such that the angle of the retroreflective materials is perpendicular to the line of sight of an observer. Further, the side face (edge) of the break is not visible from the assumed viewing direction such that the joint of each component is not conspicuous. Thus, decrease in the luminance and image quality of the aerial image is mitigated. Note that the drawings referred to in the following description of the embodiments include exaggerated representations to facilitate understanding of the invention and do not represent the shape or scale of an actual product.

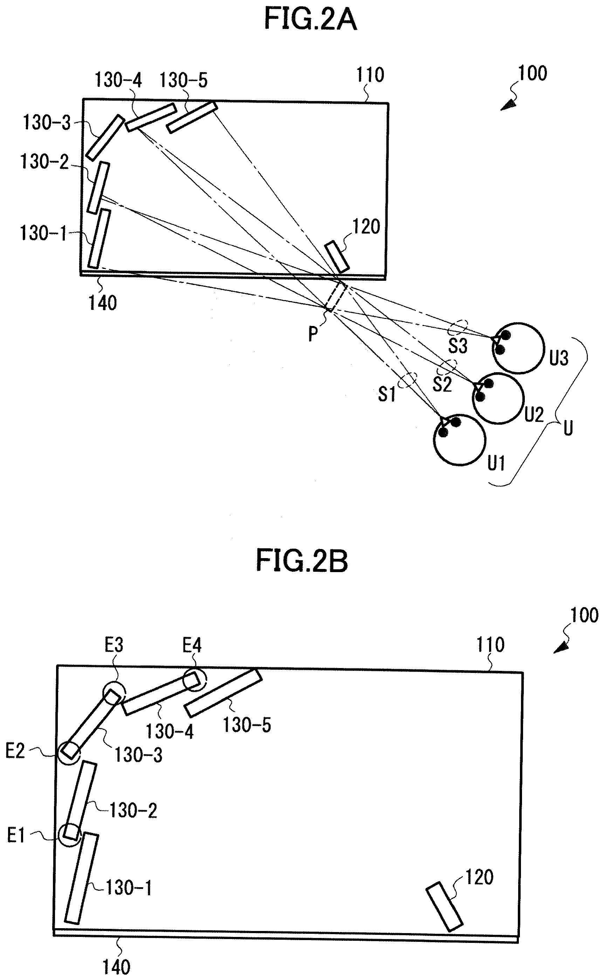

Next, an embodiment of the present invention will be described in detail. FIG. 2A is a top view illustrating a schematic configuration of a display apparatus according to a first embodiment of the present invention, and each part is schematically represented such that the configuration inside the casing can be understood.

A display apparatus 100 of the present embodiment includes a casing 110, a light source 120 arranged in the casing 110, a plurality of retroreflective materials 130-1, 130-2, 130-3, 130-4, and 130-5 (collectively, the retroreflective materials 130), and a beam splitter 140. The casing 110 is not limited in shape, size, etc., but in the illustrated example, the casing 110 has a substantially rectangular shape and accommodates the light source 120 and the retroreflective materials 130 in an internal space. The beam splitter 140 is arranged on one side surface of the casing 110, and an aerial image P is displayed at a position symmetrical to the light source 120 with respect to the surface of the beam splitter 140.

The light source 120 generates an original image of the aerial image P, and its configuration is not particularly limited, but may be, for example, an LED or an organic EL display, a projector, or an LED unit in which a plurality of LEDs are 2-dimensionally arranged. In the example illustrated in the figure, the light source 120 is a display arranged inside the beam splitter 140, and the display outputs an original image of the aerial image P toward the beam splitter 140.

The beam splitter 140 is attached to the surface of the casing 110 such that light from the light source 120 is incident thereon. The beam splitter 140 is configured by forming, for example, a dielectric multilayer film or an antireflection film on the front or back surface of a substrate made of glass or plastic shaped as a flat plate. The beam splitter 140 may be a half mirror in which the amount of reflected light is substantially equal to the amount of transmitted light, a beam splitter in which the ratio of the amount of reflected light to the amount of transmitted light is different, or a polarization beam splitter.

The retroreflective material 130 is an optical member that reflects light in the same direction as the incident light, and although its configuration is not particularly limited, it may be configured by, for example, a triangular pyramid retroreflective element, a full cube corner retroreflective element, or the like. Further, the retroreflective material 130 may be formed by sticking a retardation film such as a A/4 plate on its surface.

A characteristic configuration in the present embodiment is that a plurality of retroreflective materials 130-1 to 130-5 are arranged in a range in the casing 110 in which the observer U can observe the aerial image P. In the present embodiment, instead of using one planar retroreflective material 40 as illustrated in FIG. 1 described in the conventional technology, such a retroreflective material 40 is split into at least 3 or more small retroreflective materials 130, which are arranged in the casing 110. Each of the retroreflective materials 130 has, for example, a strip shape, and as illustrated in FIG. 2A, the retroreflective materials 130 are arranged along left and right inner walls with a corner portion of the casing 110 in the center.

In the present embodiment, the retroreflective material 130-3 is arranged in a corner portion of the casing 110, and a pair of retroreflective materials 130-1 and 130-2 and a pair of retroreflective materials 130-4 and 130-5 are arranged on respective sides of the corner portion. The retroreflective material 130-1 arranged at one end portion is positioned such that its retroreflective surface is at an angle perpendicular to the viewing direction (center of the viewing angle S3) of the observer U3, the retroreflective material 130-5 arranged at the other end portion is positioned such that its retroreflective surface is at an angle perpendicular to the viewing direction (center of the viewing angle S1) of the observer U1, and the retroreflective material 130-3 arranged in the center is positioned such that its retroreflective surface is at an angle perpendicular to the viewing direction (center of the viewing angle S2) of the observer U2.

The range in which the observer U can observe the aerial image P is limited to the range in which the observer U can observe the retroreflective material 130 through the aerial image P. FIG. 2A illustrates a range in which the aerial image P can be observed, from the position of the observer U1 to the position of the observer U3. That is, the position of the observer U1 is a boundary at which the retroreflective material 130-5 can be observed at the viewing angle S1, and the position of the observer U3 is a boundary at which the retroreflective material 130-1 can be observed at the viewing angle S3.

As described above, by arranging the retroreflective materials 130-1, 130-2, 130-4 and 130-5 on respective sides of the central retroreflective material 130-3 such that the angles of the retroreflective surfaces are gradually different, the angles of the retroreflective materials with respect to the observer's line of sight can be made closer to perpendicular as compared with the case where one planar retroreflective material is arranged in the conventional structure, whereby the decrease in the retroreflective light from the retroreflective material due to the viewing angle of the observer is mitigated, and the decrease in the luminance and image quality of the aerial image P can be mitigated.

Further, as can be easily understood by a person skilled in the art, by increasing the number of retroreflective materials and subdividing the retroreflective materials further, it is possible to make the angular changes of the plurality of retroreflective materials smaller, whereby the angles of the retroreflective materials with respect to the observer's line of sight can be made closer to perpendicular within a range in which the observer can observe the aerial image P.

Next, a preferred embodiment of the present embodiment will be described. FIG. 2B is a diagram illustrating a preferred arrangement example of the retroreflective materials illustrated in FIG. 2A. As illustrated in FIGS. 2A and 2B, the retroreflective materials 130 are arranged such that their sides (edges) are covered by the adjacent retroreflective materials. As illustrated, edge E2 of one side of the central retroreflective material 130-3 is covered by one side of the front adjacent retroreflective material 130-2, edge E1 of the other side of the retroreflective material 130-2 is covered by one side of the front adjacent retroreflective material 130-1, and similarly, edge E3 of the other side of the central retroreflective material 130-3 is covered by one side of the front adjacent retroreflective material 130-4, and edge E4 of the other side of the retroreflective material 130-4 is covered by one side of the front adjacent retroreflective material 130-5.

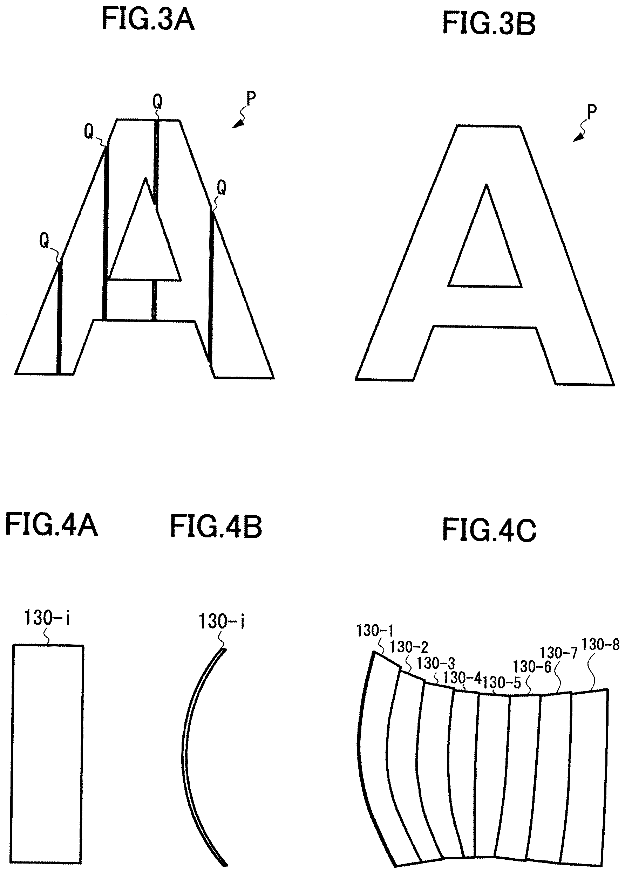

FIG. 3A is an example of an aerial image when the side of the retroreflective material is not covered by the side of the adjacent retroreflective material and the edge of the side is exposed, and FIG. 3B is an example of an aerial image when the side of the retroreflective material and the side of the adjacent retroreflective material overlap according to the present embodiment.

When the sides of the retroreflective materials do not overlap and the edges are exposed, the joint region between the edges of the adjacent retroreflective material is not imaged as an aerial image, such that a line Q corresponding to the joint region between the edges is generated in the aerial image P, and the image quality of the aerial image P is decreased. On the other hand, when the side of the retroreflective material is overlapped by the side of the adjacent retroreflective material as in the present embodiment, because a non-imaging region caused by a joint region is not generated between the retroreflective materials, a joint line does not appear in the aerial image P, and the image quality can be maintained.

Thus, by overlapping the side of the retroreflective material with the side of the adjacent retroreflective material at the front, a non-imaging region caused by the joint region between the retroreflective materials is not generated, and the image quality of the aerial image P can be prevented from being decreased.

Although the retroreflective material 130 has a strip shape in the above embodiment, this is only an example, and the retroreflective material 130 may have another shape. For example, the retroreflective materials may be trapezoidal or fan-shaped. The retroreflective materials 130 may all be the same size or may be different in size. For example, the shorter direction of the central retroreflective material 130-3 may be larger than the shorter direction of the adjacent retroreflective materials 130-2 and 130-4, or may be smaller.

Next, another preferred mode of the present embodiment will be described. FIG. 4A is a front view of the retroreflective material, FIG. 4B is a side view of the retroreflective material, and FIG. 4C is a perspective view of the retroreflective materials constituting a three-dimensional curved surface. As illustrated in FIGS. 4A and 4B, one retroreflective material 130-i has a substantially rectangular shape and is curved along the longitudinal direction so as to constitute a curved surface. As illustrated in FIG. 4C, the retroreflective materials 130-1, 130-2, 130-3, and 130-4 are arranged so as to spread fan-like on one side of the retroreflective material 130-5, and the retroreflective materials 130-6, 130-7, and 130-8 are arranged so as to spread fan-like on the other side. Thus, by combining the strip-shaped retroreflective materials having a plurality of curved surfaces, a retroreflective material having a pseudo three-dimensional curved surface can be constituted. Also in this example, the side portion of the retroreflective material and the side portion of the adjacent retroreflective material can be arranged so as to overlap each other.

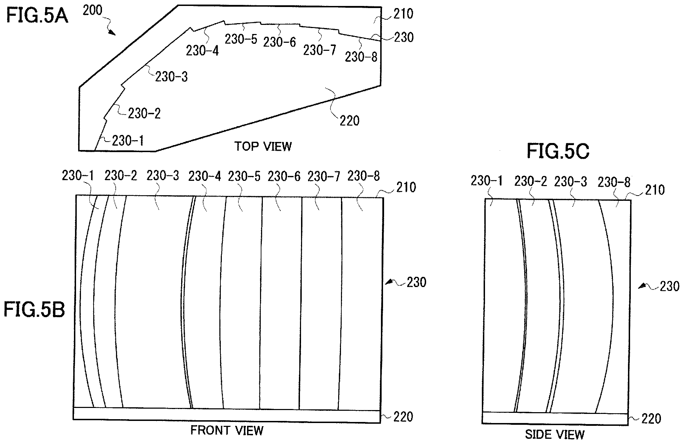

Next, a method of mounting a plurality of retroreflective materials in a casing will be described. The method of mounting the retroreflective materials is not particularly limited, and each retroreflective material may be fixed to a support member such as a base, for example. FIGS. 5A to 5C illustrate an example of a base for mounting the retroreflective materials constituting the three-dimensional curved surface illustrated in FIG. 4C, FIG. 5A is a top view of the base, FIG. 5B is a front view thereof, and FIG. 5C is a side view thereof.

A base 200 includes a side surface 230 in which eight curved mounting surfaces 230-1, 230-2, 230-3, 230-4, 230-5, 230-6, 230-7, and 230-8 (collectively, the mounting surfaces 230) are formed between a top surface 210 and a bottom surface 220 which is somewhat larger than the top surface 210. The mounting surfaces 230-2 and 230-1 are formed on one side of a central mounting surface 230-3 through steps, and mounting surfaces 230-4, 230-5, 230-6, 230-7, and 230-8 are formed on the other side through steps.

The mounting surfaces 230-1, 230-2, 230-3, 230-4, 230-5, 230-6, 230-7, and 230-8 define the shape of the retroreflective surfaces of the retroreflective materials 130-1, 130-2, 130-3, 130-4, 130-5, 130-6, 130-7, and 130-8, and the retroreflective material 130 is secured to the mounting surface 230 by using, for example, double-sided adhesive or mechanical means. Even when the shape processing of the retroreflective material 130 is difficult or the retroreflective material 130 is liable to be elastically deformed, the retroreflective surface of the retroreflective material 130 can be made to follow the shape of the mounting surface 230 by fixing the retroreflective material 130 to the mounting surface 230. Further, a step is formed at each boundary of the mounting surface 230, and this step allows the side of the retroreflective material to overlap with the side of the adjacent retroreflective material. Thus, the base 200 to which the retroreflective material 130 is fixed is arranged inside the casing 110.

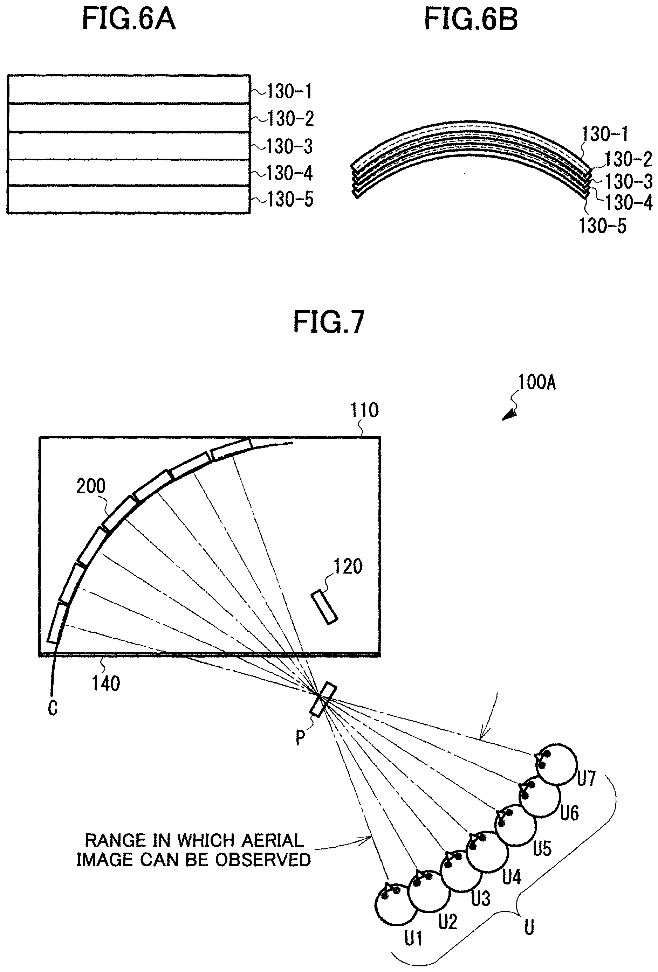

Although the longitudinal direction of each of the retroreflective materials 130 is arranged in the vertical direction of the drawing in the above embodiment, this is only an example, and other arrangements may be used. For example, as illustrated in FIGS. 6A and 6B, the longitudinal direction of each of the retroreflective materials 130-1 to 130-5 may be arranged in the transverse direction of the drawing or in the oblique direction. In this case also, it is desirable that the side portion of the retroreflective materials overlaps the side portion of the adjacent retroreflective material.

FIG. 7 is a top view illustrating a schematic configuration of a display apparatus according to a second embodiment of the present invention. A display apparatus 100A of the present embodiment is different from the above-described embodiment in that a plurality of retroreflective materials 200 are arranged along a concentric circle C with the imaging position of the aerial image P as the center. Although the shape, size, and number of the retroreflective materials 200 are not particularly limited, for example, the retroreflective materials 200 are in a strip shape, and a plurality of the strip-shaped retroreflective materials 200 are arranged along the concentric circle C with a substantially equal distance from the center of the imaging position of the aerial image P. Each of the plurality of retroreflective materials 200 is arranged so as to be in contact with or in close contact with a side portion of an adjacent retroreflective material, so as not to cause a gap which becomes a non-imaging region of the aerial image at a joint of the retroreflective materials. However, as described in the previous embodiments, a side portion of the retroreflective material may overlap with a side portion of an adjacent retroreflective member.

In this figure, the position of the observer U1 is one boundary where one end portion of the retroreflective material 200 can be observed through the aerial image P, and the position of the observer U7 is the other boundary where the other end portion of the retroreflective material can be observed through the aerial image P, that is, the position from the observer U1 to the observer U7 is a range in which the aerial image P can be observed.

According to the present embodiment, by arranging the plurality of retroreflective materials concentrically such that the distance from the aerial image P to the retroreflective materials 200 is constant, it is possible to prevent partial degrading of imaging and to maintain the image quality of the aerial image even when the viewing angle of the observer is changed.

Although preferred embodiments of the present invention have been described in detail above, the present invention is not limited to specific embodiments, and various modifications and changes are possible within the scope of the invention described in the claims.

## Claims

1. A display apparatus configured to display an aerial image by using retroreflection, the display apparatus comprising:
a light source;
a beam splitter configured to reflect light output from the light source; and
a plurality of retroreflective materials configured to reflect light from the beam splitter in a same direction as incident light, wherein
the plurality of retroreflective materials include at least three retroreflective materials that are arranged in a range where the aerial image can be observed, and the plurality of retroreflective materials are in a positional relationship such that at least one side of each of the retroreflective materials is overlapping with a side of an adjacent retroreflective material.

2. The display apparatus according to claim 1, wherein each of the plurality of retroreflective materials is arranged at an angle perpendicular to a line of sight of an observer, when the retroreflective material is observed from above.

3. The display apparatus according to claim 1 or 2, wherein the plurality of retroreflective materials are arranged on respective sides of a central retroreflective material among the plurality of retroreflective materials, such that angles of retroreflective surfaces of the plurality of retroreflective materials gradually differ.

4. The display apparatus according to one of claims 1 to 3, wherein the plurality of retroreflective materials are arranged concentrically with respect to the aerial image, when the retroreflective materials are observed from above.

5. The display apparatus according to one of claims 1 to 4, wherein each of the plurality of retroreflective materials has a strip shape formed with a curved surface curved in a longitudinal direction, and a pseudo three-dimensional curved surface is formed by the plurality of strip-shaped retroreflective materials.

6. The display apparatus according to one of claims 1 to 5, further comprising:
a base formed with a plurality of mounting surfaces for mounting each of the plurality of retroreflective materials, wherein
each of the mounting surfaces defines a shape of a retroreflective surface of a respective one of the plurality of retroreflective materials.
